# EUROPEAN PATENT APPLICATION

(11) **EP 1 199 822 A2**
(43) Date of publication of application: **24.04.2002**
(21) Application number: 01308074.2
(22) Date of filing: 24.09.2001
(51) Int. Cl.: H04B 10/10, G02B 23/00

(54) **Telescope for a free-space wireless optical communication system**

(30) Priority: 05.10.2000 US 679159
(71) Applicant: LUCENT TECHNOLOGIES INC., Murray Hill, New Jersey 07974-0636 (US)
(72) Inventor: Presby, Herman Melvin, Highland Park, NJ 08904 (US); Tyson, John A., Pottersville, New Jersey (US)
(74) Representative: Buckley, Christopher Simon Thirsk

(57) **Abstract**

A free-space wireless optical communication system is disclosed that utilizes a telescope design having aspherical mirrors, such as a Richey-Chetrien (RC) telescope. RC telescopes are characterized by a concave primary mirror and a convex secondary mirror each having a hyperbolic shape. The mirror configuration of the present invention allows the primary and secondary mirrors to be positioned closer together than conventional designs, allowing for a very compact system. The disclosed mirrors can be thin and lightweight, allowing for a lightweight telescope unit. The mirror configuration of the present invention provides a larger focal plane, allowing for automatic alignment between a transmitter and receiver with a stationary or fixed mirror design, further contributing to a lower fabrication cost, and can be fabricated with large diameters, allowing the transmission of high beam intensities at eye-safe levels since the energy is spread over a large area. A number of fabrication techniques are disclosed that permit the optical telescopes of the present invention to be fabricated at a reasonable cost that permits such optical telescopes to be deployed in wireless optical communication systems.

## Description

### Cross-Reference to Related Applications

The present invention is related to United States Patent Application entitled "Point-to-Multipoint Free-Space Wireless Optical Communication System," (Attorney Docket Number 92-4), United States Patent Application entitled "Method and Apparatus for Controlling Received Power Levels Within a Free-Space Optical Communication System," (Attorney Docket Number HM Presby 94-6), United States Patent Application entitled "Method and Apparatus for Aligning Telescopes Within a Free-Space Optical Communication System" (Attorney Docket Number HM Presby 95-7) and United States Patent Application entitled "Method and Apparatus for Communication Signal Autotracking Within a Free-Space Optical Communication System" (Attorney Docket Number Ahrens 7-93-5), each filed contemporaneously herewith, assigned to the assignee of the present invention and incorporated by reference herein.

### Field of the Invention

The invention is related to the field of free-space wireless optical communications, and more particularly, to improved optical telescopes for free-space wireless optical communication systems.

### Background of the Invention

In wireless optical communication systems, the optical signal propagates in free space. In contrast to radio frequency (RF) communication systems, optical wireless communication systems are extremely directional. Thus, precise alignment is required between the transmitting unit and the receiving unit, often referred to as transmitting and receiving telescopes, respectively. The highly directional nature of wireless optical communication systems, however, provides the advantage of improved security, since the optical signal can only be intercepted along the path of the transmitted light. In addition, the optical portion of the spectrum is not regulated by the government. Thus, a government license is not required to operate the optical transmitter and receiver telescopes, unlike a comparable radio frequency (RF) wireless communication system. More importantly, the bandwidth or information carrying capacity of optical wireless systems is much greater than that of RF wireless communication systems.

Wireless optical communication systems have an advantage over fiber-based optical communication systems as well, since wireless communication systems do not require a physical connection between the transmitter and the receiver. In an urban environment, it can be difficult to install a physical connection, such as an optical fiber, between two buildings, especially if the buildings are separated by a street, another building or a body of water. A wireless optical link only requires an unobstructed path between the transmitter and the receiver, which is generally easier to achieve in an urban environment than a physical link.

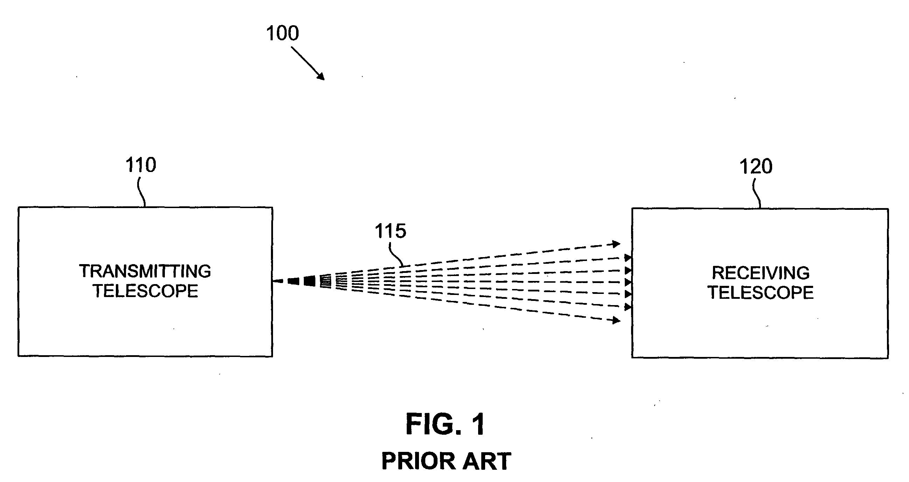

FIG. 1 illustrates a conventional wireless optical system 100. As shown in FIG. 1, a conventional wireless optical system 100 typically includes a transmitting telescope 110, for forming a transmitted beam 115 that is aimed at a receiving telescope 120. Typically, the optical signal to be transmitted is originally emitted from a semiconductor laser and then may be amplified with an optical amplifier. The emitting facet of the laser (or an optical fiber into which the laser is coupled) lies at the front focal plane of the transmitting telescope 110. The received signal is typically collected with a photodetector (or an optical fiber connected to the photodetector) positioned at the focal plane of the receiving telescope 120. For a more detailed discussion of conventional wireless optical systems 100, see, for example, P.F. Szajowski, "Key Elements of High-Speed WDM Terrestrial Free-Space Optical Communications Systems," SPIE Paper No. 3932-01, Photonics West (Jan. 2000), incorporated by reference herein.

Currently, the telescopes 110, 120 in most conventional wireless optical systems 100 were designed primarily for astronomical applications and have been adapted for use in optical communication systems 100. Most conventional telescopes include two mirrors and an optical detector, such as a photodetector. The primary mirror reflects the received optical signal to a secondary mirror that in turn redirects the received optical signal to the optical detector for collection and processing. Typically, optical telescopes are characterized by a concave primary mirror and a concave secondary mirror that are spherical in shape.

While such conventional optical telescopes perform satisfactorily for many optical communication system installations, they suffer from a number of limitations, which if overcome, could significantly improve the performance of such optical communication systems. Specifically, it is desirable to extend the bandwidth, link range and reliability of such optical communication systems to ever increasing levels. Nonetheless, it is desirable to achieve improved optical telescopes that remain lightweight and compact, can be manufactured at a low cost and are capable of efficiently transmitting optical power at eye-safe levels.

### Summary of the Invention

Generally, a free-space wireless optical communication system is disclosed that satisfies the above-stated objectives of improved bandwidth, link range and reliability, relative to conventional designs. The disclosed free-space wireless optical communication system utilizes a telescope design having aspherical mirrors, such as a Richey-Chetrien (RC) telescope. RC telescopes are characterized by a concave primary mirror and a convex secondary mirror each having a hyperbolic shape.

The present invention provides a mirror configuration that allows the primary and secondary mirrors to be positioned closer together than conventional designs, allowing for a very compact system. The disclosed mirrors are not formed of thick bulk glass. Thus, the mirrors can be thin and lightweight, allowing for a lightweight telescope unit. In addition, the present invention provides a larger focal plane that allows for automatic alignment between a transmitter and receiver with a stationary or fixed mirror design, further contributing to a lower fabrication cost. Furthermore, the mirrors can be fabricated with large diameters, to allow the transmission of high beam intensities at eye-safe levels since the energy is spread over a large area.

Generally, the hyperbolic mirrors of the present invention are more complex and expensive to fabricate than the spherical mirrors or lenses that have typically been utilized in wireless optical communication systems. Thus, a number of fabrication techniques are disclosed that permit the optical telescopes of the present invention to be fabricated at a reasonable cost that permits such optical telescopes to be deployed in wireless optical communication systems.

A more complete understanding of the present invention, as well as further features and advantages of the present invention, will be obtained by reference to the following detailed description and drawings.

### Brief Description of the Drawings

FIG. 1 is a block diagram of a conventional wireless optical communication system; and
FIG. 2 illustrates a Richey-Chetrien (RC) optical telescope that may be used in the wireless optical communication system of FIG. 1 in accordance with the present invention.

### Detailed Description

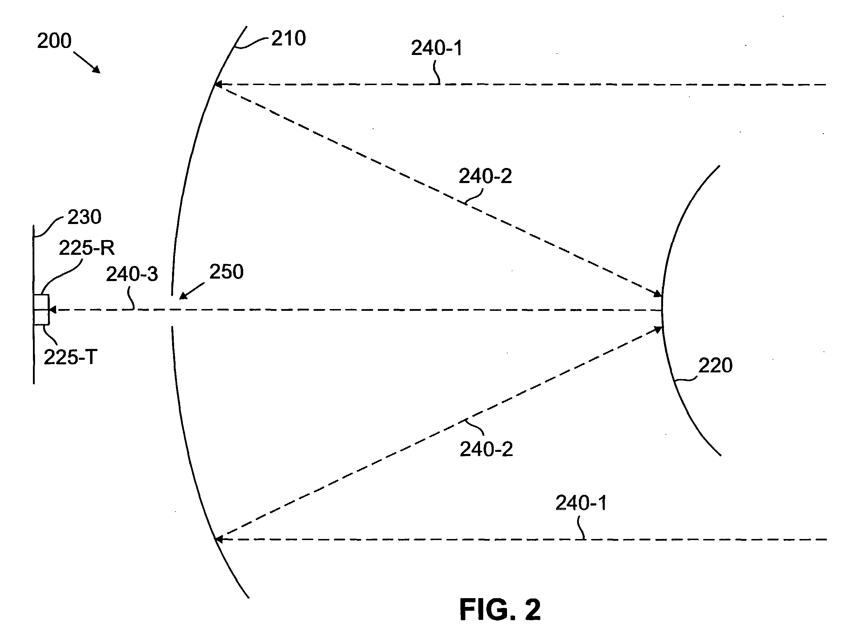

The present invention provides improved optical telescopes for wireless optical communication systems that satisfy the above-stated objectives of improved bandwidth, link range and reliability, relative to conventional designs. According to one feature of the present invention, Richey-Chetrien (RC) telescopes, discussed further below in conjunction with FIG. 2, are utilized in wireless optical communication systems. RC telescopes have previously been used only for large astronomical telescopes, including the Hubble Space Telescope. For a detailed discussion of conventional applications and parameters of RC telescopes, see, for example, Daniel J. Schroeder, Astronomical Optics, 94-109 (Academic Press, 1987), incorporated by reference herein. Generally, RC telescopes are characterized by a concave primary mirror and a convex secondary mirror each having a hyperbolic shape.

FIG. 2 illustrates an RC optical telescope 200 in accordance with the present invention. As shown in FIG. 2, the optical telescope 200 is comprised of a concave primary mirror 210 and a convex secondary mirror 220, each having a hyperbolic shape. As discussed further below, the present invention provides the primary mirror 210 and secondary mirror 220 in a configuration that allows the mirrors 210, 220 to be positioned closer together than conventional designs. The primary mirror 210 reflects the received optical signal 240-1 to the secondary mirror 220 that in turn redirects the received optical signal 240-2 through a hole 250, generally in the center of the primary mirror 210, to an optical detector 225-R positioned at the focal plane 230, for collection and processing. The focal plane 230 may also be positioned in front of the primary mirror 210, as would be apparent to a person of ordinary skill in the art. Although illustrated as a single on-axis ray, the received optical signal 240 is a conically converging bundle of light coming to a focus at the optical detector 225-R.

The RC optical telescope 200 of the present invention can be further characterized by the conic constants of the mirrors 210, 220. Specifically, while prior art telescopes are characterized by mirrors having conic constants of 0 (spherical mirrors) and -1 (paraboloidal mirrors), the present invention contemplates hyperboloidal and aspherical mirrors 210, 220 having conic constants that are less than -1. The precise specifications for an illustrative RC optical telescope 200 in accordance with the present invention are set forth below, in a section entitled "Hyperbolic Mirror Specifications."

Generally, the hyperbolic mirrors of the present invention are more complex and expensive to fabricate than the spherical mirrors or lenses that have typically been utilized in wireless optical communication systems. Thus, as discussed further below in a section entitled "Hyperbolic Mirror Fabrication Techniques," another feature of the present invention provides several techniques that permit the optical telescopes of the present invention to be fabricated at a reasonable cost that permits such optical telescopes to be deployed in wireless optical communication systems.

According to yet another feature of the present invention, the RC telescopes of the present invention provide a larger field of view 230 than conventional Newtonian designs that focus a received signal at one ideal point. Rather, the hyperbolic mirror design of the present invention provides a large focal plane or collection area 230 (on the order of one square centimeter) for capturing the received signal 240. While the illustrative optical telescope 200 in FIG. 2 is shown only in a receiving mode, the optical telescope 200 can be configured in transmitting or bi-directional modes as well, as would be apparent to a person of ordinary skill in the art.

In a transmission mode, the optical signal to be transmitted is emitted from a semiconductor laser. Thus, the emitting facet of the laser (or a transmitting optical fiber 225-T into which the laser is coupled) lies at the focal plane 230 of the transmitting telescope 200. The received signal 240 is collected with a photodetector (or a receiving optical fiber 225-R connected to the photodetector) positioned at the focal plane 230 of the receiving telescope 200. Thus, the transmit and receive fibers 225-T, 225-R are positioned in the field of view 230 of the telescope 200, as shown in FIG. 2.

As previously indicated, optical signals are extremely directional. Thus, two communicating telescopes 200 must be substantially aligned with one another. Nonetheless, atmospheric diffraction effects can cause the transmitted beam to deviate from the carefully aimed path (beam wander). In addition, the alignment can be degraded as a result of temperature variations or movement of the transmitting unit or the receiving unit, for example, when one or both structures upon which the transmitting or receiving telescopes are mounted move. Thus, according to another feature of the present invention, the transmit or receive fibers 225-T, 225-R (or both) can be repositioned within the larger focal plane 230 of the optical telescope 200 to account for misalignment between a transmitter and receiver. The transmit or receive fibers 225-T, 225-R (or both) can be repositioned within the larger focal plane 230, for example, using x-y-z piezoelectric stages or micropositioner x-y-z stages, commercially available, for example, from Melles Griot of Irvine, CA.

Thus, the present invention provides for automatic alignment between a transmitter and receiver with a stationary or fixed mirror design. In other words, the present invention permits angle of arrival errors to be corrected in the focal plane 230, by moving the transmit or receive fiber 225-T, 225-R or by providing an adjacent fiber in the focal plane 230 to capture the received signal. In an alternate implementation, additional flexibility can be obtained by varying the angle of the secondary mirror 220 in the transmitting or receiving telescopes (or both). For a more detailed discussion of a suitable automatic beam tracking technique based on dithering, see our co-pending United States Patent Application entitled "Method and Apparatus for Aligning Telescopes Within a Free-Space Optical Communication System" (Attorney Docket Number HM Presby 95-7) and United States Patent Application entitled "Method and Apparatus for Communication Signal Autotracking Within a Free-Space Optical Communication System" (Attorney Docket Number Ahrens 7-93-5), each filed contemporaneously herewith, assigned to the assignee of the present invention and incorporated by reference herein. Generally, the disclosed dithering technique varies the position of the receive fiber 225-R in the z-direction. In this manner, if a received signal has insufficient power to be detected, the receive fiber 225-R can be withdrawn or "pulled back" in the z-direction to increase the angle of divergence and thereby capture some of the received power until focus is achieved.

It is noted that rather than having the beam focused on the photodetector or optical fiber, additional optics in the form of a field lens can be incorporated in the hole 250 of the primary mirror 210 to render a collimated beam exiting the hole 250 in the primary mirror 210 for additional processing. A further focusing lens is then utilized to focus the beam onto the photodetector or into the optical fiber.

### Hyperbolic Mirror Fabrication Techniques

As previously indicated, the hyperbolic mirrors of the present invention are generally more expensive to fabricate than the spherical mirrors that have typically been utilized in wireless optical communication systems. Thus, according to another feature of the present invention, a number of fabrication techniques are disclosed that permit the RC optical telescopes of the present invention to be fabricated at a reasonable cost.

According to a first fabrication technique, referred to herein as the "electro-formed metal mirror fabrication technique," a metal alloy material, such as nickel or gold, is deposited using an "inverse metal or glass master," such as a mandril to grow the mirror on the mandril surface. The mandril is intended for repeated use and may be fabricated, for example, using stainless steel or glass. Such electro-formed mirrors can be custom-fabricated by Media Lario S.r.l of Italy. For information about Media Lario and its electro-formed mirror products, see http://www.media-lario.it/eng/index.htm, incorporated by reference herein.

According to a second fabrication technique, referred to herein as the "diamond-turning mirror fabrication technique," a computer description is generated of the desired mirror shape, then a precision lathe machines a metal form, such as stainless steel, to produce the mirror in the desired shape. For a general discussion of diamond-turning techniques, see, for example, Theodore T. Saito, "Diamond Turning of Optics: The Past, the Present, and the Exciting Future," Optical Engineering, Volume 17, Number 6, 570-73 (1978), incorporated by reference herein.

According to yet another fabrication technique, referred to herein as the "casting fabrication technique," the hyperbolic mirrors are constructed using well-known casting techniques, such as those employed by Ball Aerospace & Technologies Corp. of Boulder, CO.

### Hyperbolic Mirror Specifications

According to another feature of the present invention, the specifications of the RC telescope 200 are optimized for (i) a wide field of view with improved image quality, (ii) lighter weight, and (iii) shorter length, relative to conventional optical telescope designs. In one particular embodiment, the primary mirror 210 has a diameter of 20 cm and has an asphere or hyperbolic shaped defined by a radius of curvature of 25 cm and a conic constant of -1.034. Likewise, the secondary mirror 220 has a diameter of 4.4 cm and has an asphere or hyperbolic shaped defined by a radius of curvature of 6.6 cm and a conic constant of -3.14. In this illustrative embodiment, the primary and secondary mirrors 210, 220 were each coated to provide high reflectivity at a wavelength of 1.5 microns. The spacing of the primary and secondary mirrors 210, 220 in this illustrative embodiment is 10 cm.

In another embodiment, the primary mirror 210 has a diameter of 20 cm, and has an asphere or hyperbolic shaped defined by a radius of curvature of 315.8 mm and a conic constant of-1.0667. Likewise, the secondary mirror 220 has a diameter of 50.2 mm and has an asphere or hyperbolic shaped defined by a radius of curvature of 110.8 mm and a conic constant of -4.573. In this embodiment, the primary and secondary mirrors 210, 220 were each coated to provide high reflectivity at a wavelength of 1.5 microns. The spacing of the primary and secondary mirrors 210, 220 is 12 cm.

In yet another embodiment, the primary mirror 210 has a diameter of 20 cm, and has an asphere or hyperbolic shaped defined by a radius of curvature of 15 cm and a conic constant of -1.0097. Likewise, the secondary mirror 220 has a diameter of 2.9 cm and has an asphere or hyperbolic shaped defined by a radius of curvature of 2.3 cm and a conic constant of -1.947. In this embodiment, the primary and secondary mirrors 210, 220 were each coated to provide high reflectivity at a wavelength of 1.5 microns. The spacing of the primary and secondary mirrors 210, 220 is 6.5 cm.

### Hyperbolic Mirror Features

The hyperbolic mirror design of the present invention provides a number of advantages relative to conventional spherical designs. As already mentioned, the hyperbolic mirrors can be fabricated at a relatively low cost using a number of identified fabrication techniques. In addition, the larger focal plane of the present invention provides for automatic alignment between a transmitter and receiver with a stationary or fixed mirror design, further contributing to a lower fabrication cost.

In addition, the hyperbolic mirror design of the present invention allows the primary and secondary mirrors 210, 220 to be positioned closer together than conventional designs allowing for a very compact system. Although the particular inter-mirror distances will vary with the conic constants, the illustrative specification set forth above provides an inter-mirror distance of only 5-10 cm.

Since the mirrors are not formed of thick bulk glass, the mirrors can be thin and lightweight, allowing for a lightweight unit. The mirrors can be fabricated with large diameters, to allow the transmission of high beam intensities at eye-safe levels since the energy is spread over a large area. A 20 cm telescope could safely transmit, for example, on the order of 1 watt at a wavelength of 1.5 microns.

It is to be understood that the embodiments and variations shown and described herein are merely illustrative of the principles of this invention and that various modifications may be implemented by those skilled in the art without departing from the scope and spirit of the invention.

## Claims

1. An optical telescope for a wireless optical communications system, comprising at least two aspherical mirrors.

2. The optical telescope of claim 1, wherein said two aspherical mirrors are part of an RC optical telescope.

3. The optical telescope of claim 1, further comprising a field lens.

4. The optical telescope of claim 1 , wherein said two aspherical mirrors are fixed.

5. The optical telescope of claim 1, wherein at least one of said aspherical mirrors is constructed using an electro-formed mirror fabrication technique.

6. The optical telescope of claim 1 , wherein at least one of said aspherical mirrors is constructed using a diamond-turning mirror fabrication technique.

7. The optical telescope of claim 1, wherein at least one of said aspherical mirrors is constructed using a casting fabrication technique.

8. The optical telescope of claim 1 , wherein one of said aspherical mirrors is a concave primary mirror and a second of said aspherical mirrors is a convex secondary mirror.

9. The optical telescope of claim 1 , further comprising a receiving fiber positioned at a focal plane of said optical telescope.

10. The optical telescope of claim 1 , further comprising a transmitting fiber positioned at a focal plane of said optical telescope.

11. The optical telescope of claim 1 , comprising a concave primary mirror having a diameter of approximately 20 cm and an asphere shape defined by a radius of curvature of approximately 25 cm and a conic constant of approximately -1.034.

12. The optical telescope of claim 1 , comprising a convex secondary mirror having a diameter of approximately 4.4 cm and an asphere shaped defined by a radius of curvature of approximately 6.6cm and a conic constant of approximately -3.14.

13. A Richey-Chetrien (RC) optical telescope for a wireless communications link, comprising:
a concave aspherical primary mirror;
a convex aspherical secondary mirror; and
a receiving unit positioned at a focal plane of said secondary mirror.

14. The RC optical telescope of claim 13, wherein said RC optical telescope is comprised of at least two hyperbolic mirrors.

15. The RC optical telescope of claiml 3, further comprising a field lens.

16. The RC optical telescope of claiml 3, wherein said two aspherical mirrors are fixed.

17. The RC optical telescope of claim 13, further comprising one or more fibers that may be repositioned within a focal plane of said RC optical telescope.

18. A method for receiving an optical signal in a free-space wireless communication system, comprising the steps of:
capturing said optical signal using an aspherical primary mirror;
reflecting said captured optical signal using an aspherical secondary mirror; and
redirecting said captured optical signal using said aspherical secondary mirror to an optical detector positioned at a focal plane of said aspherical secondary mirror.

19. A method for transmitting an optical signal in a transmitting telescope of a free-space wireless communication system, comprising the steps of:
emitting said optical signal from a semiconductor laser positioned at a focal plane of said transmitting telescope;
capturing said optical signal using an aspherical secondary mirror;
redirecting said captured optical signal using said aspherical secondary mirror to an aspherical primary mirror; and
reflecting said captured optical signal into free-space using said aspherical primary mirror.
